# EUROPÄISCHE PATENTANMELDUNG

(11) **EP 0 661 012 A1**
(43) Veröffentlichungstag der Anmeldung: **05.07.1995**
(21) Anmeldenummer: 94117901.2
(22) Anmeldetag: 12.11.1994
(51) Int. Cl.: A45D 40/00, B65D 83/00

(54) **Cremedose**

(30) Priorität: 16.11.1993 DE 9317521 U
(71) Anmelder: Bramlage GmbH, D-49393 Lohne (DE)
(72) Erfinder: Corzilius, Rolf, D-49393 Lohne (DE); Schölzel, Wolfgang, D-64711 Erbach (DE)
(74) Vertreter: Mey, Klaus-Peter, Dr.-Ing. Dipl.-Wirt.-Ing.

(57) **Zusammenfassung**

Eine Cremedose für kosmetische oder medizinische Präparate, umfassend einen äußeren, mit einem Deckel verschließbaren Behälter (1) und einen dem Behälter (1) angepaßten, das Präparat enthaltenden, als auswechselbarer Einsatz ausgebildeten Innenbehälter (2) wird dahingehend weiter ausgebildet und verbessert, daß der Innenbehälter problemlos leicht in den Außenbehälter einsetzbar und verbindbar sowie nach Verbrauch des Inhalts problemlos ausstoßbar und entweder als Mehrweck-Teil nach Reinigung und Neufüllung durch einen qualifizierten Hersteller wieder verwendbar bzw. im Kreislauf wiederverwertbaren Kunststoffes umweltfreundlich recycelbar oder entsorgbar ist. Es ist daher vorgesehen, daß der Innenbehälter (2) und der Außenbehälter (1) durch verklipsbar ineinandergreifende Rastelemente miteinander verbindbar sind und der Außenbehälter (1) einen in besonderer Weise als Mittel zum Ausstoßen des Innenbehälters (2) gestalteten flexiblen Boden (3) aufweist, der als Membran nach Art eines federnden Elementes durch Druckeinwirkung von unten her gegen den Boden (4) des Innenbehälters (2) durchdrückbar bzw. hochwölbbar ist. Zweckmäßigerweise ist die Wandung des Außenbehälters (1) an ihrem unteren Ende (6) mit einer umlaufenden Standfläche (7) in der Standebene (x-x) der Cremedose (10) ausgebildet und der Boden (3) mit Abstand von dieser Standebene (x-x) an der inneren Seite der Wandung angeordnet.

## Beschreibung

Die Erfindung betrifft eine Cremedose für kosmetische oder medizinische Präparate, umfassend einen äußeren, mit einem Deckel verschließbaren Behälter und einen dem Behälter angepaßten, das Präparat enthaltenden, als auswechselbarer Einsatz ausgebildeten Innenbehälter.

Kosmetische bzw. medizinische Präparate werden üblicherweise in Dosen oder Tuben in den Handel gebracht. Cremedosen sind zumeist Wegwerfmaterial, wobei oftmals das Gewicht der Dose das Füllgewicht des Inhalts übertrifft. Dennoch werden solche Dosen beispielsweise unter ästhetischen Gesichtspunkten vielfach aus dickwandigem Glas, Porzellan oder Kunststoff hergestellt. Sie erhöhen damit nachteilig nach Verbrauch des Inhalts den ohnehin viel zu hohen Müllanfall, wobei der Aufwand für Verpackung und Behälter den Inhalt, nämlich das eigentliche Präparat, unnötig verteuert.

Es wurde bereits versucht, diesen Nachteil durch sogenannte Nachfülleinheiten zu verringern. Diese sollen mehrfach verwendet und nach Entleerung wieder nachgefüllt werden. Solche Nachfülleinheiten sind für kosmetische oder medizinische Präparate jedoch aus hygienischen und gesundheitlichen Gründen unbrauchbar, weil dabei alte Reste eines Präparates zu schädlichen Stoffen oder Übertragung von Bakterien führen können, wenn der Nachfüllbehälter vor erneuter Füllung nicht bis zur völligen Sterilität gereinigt wurde. Dies ist aber aus wirtschaftlichen Gründen nicht durchführbar.

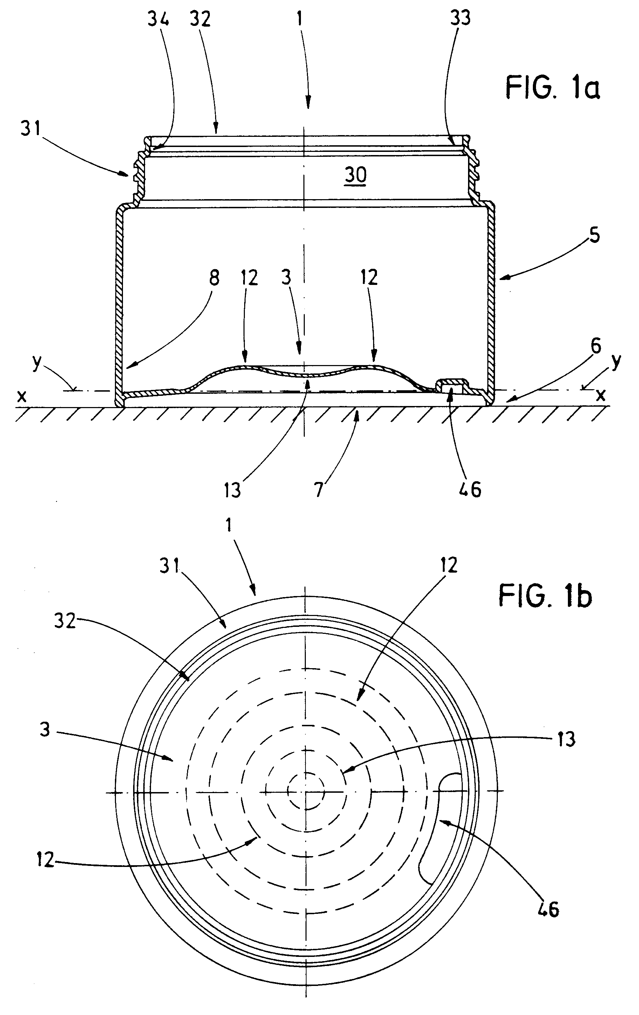

Aus dem DE-GM 80 30 266.5 ist ein Behälter für Cremeprodukte bekannt, der einen gleitenden Spenderkolben aufweist, welcher mit einer Spenderöffnung und einem beweglichen Membrandeckel ausgestattet ist. Der Behälter wird mit einer Kappe verschlossen. Nach Einlegen des Spenderkolbens und Befüllung wird der Behälter mit einem Bodenteil durch Aufschnappen, Aufschrauben oder Verschweißen von unten verschlossen. Der Spenderkolben kann durch vertikalen Druck nach unten bewegt werden. Dabei entsteht Überdruck, der Membrandeckel öffnet sich, und das Produkt quillt nach oben zur Entnahme heraus. Von Nachteil ist bei diesem bekannten Behälter ein sehr umständlicher Füllvorgang, vor allem dann, wenn gemäß Darstellung in der Figur 1 der Boden des Behälters nicht abnehmbar ist. Weiterhin ist der Spenderkolben infolge eines hohen inneren Kragens nicht bis zum Boden absenkbar. Daraus resultiert eine erhebliche nicht entnehmbare Restmenge.

Zur Vermeidung dieser Nachteile wurde bereits eine wesentlich verbesserte Cremedose für kosmetische oder medizinische Präparate entwickelt, welche entsprechend der DE-41 01 994 A1 aus einem äußeren, mit einem Deckel verschließbaren Behälter besteht und einen dem Behälter angepaßten, das Präparat enthaltenen Einsatz aufweist, wobei der äußere Behälter ein vergleichsweise formstabiler Körper mit relativ starker Wandung und einem festen Boden und der Einsatz ein vergleichsweise wesentlich instabilerer Körper mit relativ dünner Wandung ist. Dabei ist vorgesehen, daß der Boden des äußeren Behälters eine vorzugweise zentrale Öffnung aufweist, durch welche von unten her eine Druckeinwirkung auf den inneren Behälter zwecks Entnahme des Präparates ausgeübt werden kann. Weiterhin ist bei dieser Cremedose vorgesehen, daß der innere Behälter eine obere Entnahmeöffnung mit einem nach oben vorstehenden Abschlußwulst aufweist, an welchem eine die Öffnung verschließbare Siegelfolie befestigbar ist. Bei der bekannten Cremedose soll der Innenbehälter nach Verbrauch des Inhalts gegen einen neuen Innenbehälter austauschbar sein, was jedoch bei dessen Ausführung mit einer Wandung aus einer schlauchförmigen Kunststoffolie eventuell mit Schwierigkeiten verbunden sein kann. Dabei ist auch eine wünschenswerte Verbindung zwischen dem Außenbehälter und dem Einsatz nicht bzw. nicht ohne Schwierigkeiten durchführbar. Weiterhin wird die Öffnung im Boden des Außenbehälters als nachteilig empfunden, weil durch diese Öffnung unkontrollierbar Wasser, Seifenwasser oder auch Schmutzpartikel eindringen können.

Der Erfindung liegt die Aufgabe zugrunde, eine Cremedose für kosmetische oder medizinische Präparate mit einem äußeren, mit einem Deckel verschließbaren Behälter und einem diesem angepaßten und das Präparat enthaltenden, als auswechselbarer Einsatz ausgebildeten Innenbehälter dahingehend weiter auszubilden und zu verbessern, daß der Innenbehälter unter Vermeidung der vorgenannten Schwierigkeiten und Nachteile problemlos leicht in den Außenbehälter einsetzbar und verbindbar sowie nach Verbrauch des Inhalts problemlos ausstoßbar und entweder als Mehrweck-Teil nach Reinigung und Neufüllung durch einen qualifizierten Hersteller wieder verwendbar bzw. im Kreislauf wiederverwertbaren Kunststoffes umweltfreundlich recycelbar oder entsorgbar ist.

Zur Lösung der Aufgabe wird erfindungsgemäß vorgeschlagen, daß der Innenbehälter und der Außenbehälter durch verklipsbar ineinandergreifende Rastelemente miteinander verbindbar sind, und der Außenbehälter einen in besonderer Weise als Mittel zum Ausstoßen des Innenbehälters gestalteten flexiblen Boden aufweist, der als Membran nach Art eines federnden Elementes durch Druckeinwirkung von unten her gegen den Boden des Innenbehälters durchdrückbar bzw. hochwölbbar ist.

Mit Vorteil wird durch die erfindungsgemäße Ausbildung der Cremedose mit verklipsbar ineinandergreifenden Rasterelementen eine stabile und doch problemlos lösbare Verbindung zwischen Außenbehälter und dem Innenbehälter als auswechselbarem Einsatz geschaffen, und andererseits bleibt infolge Ausbildung des Bodens am Außenbehälter als Membran nach Art eines federnden Elementes dieser von unten hygienisch verschlossen und ermöglicht es dennoch, den auswechselbaren Einsatz jederzeit problemlos herauszudrücken.

Mit Vorteil ist dabei die Wandung des Außenbehälters an ihrem unteren Ende mit einer umlaufenden Standfläche in der Standebene der Cremedose ausgebildet und der als Membran ausgebildete Boden mit Abstand von dieser Standebene an der inneren Seite der Wandung angeordnet. Dadurch wird eine Berührung des Membranbodens mit der Standfläche vermieden.

Weitere Ausgestaltungen sind entsprechend den Unteransprüchen vorgesehen.

Die Erfindung wird in schematischen Zeichnungen in bevorzugten Ausführungsformen gezeigt, wobei aus den Zeichnungen weitere vorteilhafte Einzelheiten der Erfindung entnehmbar sind.

Es zeigen:
- Fig. 1a: einen Außenbehälter der Cremedose im Schnitt,
- Fig. 1b: den Außenbehälter in Draufsicht,
- Fig. 2a: einen Innenbehälter im Schnitt,
- Fig. 2b: den Innenbehälter in Draufsicht,
- Fig. 3: einen Außenbehälter in Ansicht,
- Fig. 4: einen Innenbehälter in Ansicht,
- Fig. 5: im Detail und in vergrößertem Maßstab einen Schnitt durch den Hals des Außenbehälters,
- Fig. 6: im Detail und im vergrößerten Maßstab einen Schnitt durch den oberen Teil des Innenbehälters,
- Fig 7 - 12: im Schnitt und im vergrößertem Maßstab die komplette Cremedose mit Außen- und Innenbehälter sowie mit unterschiedlichen Ausbildungen des Membranbodens am Außenbehälter.

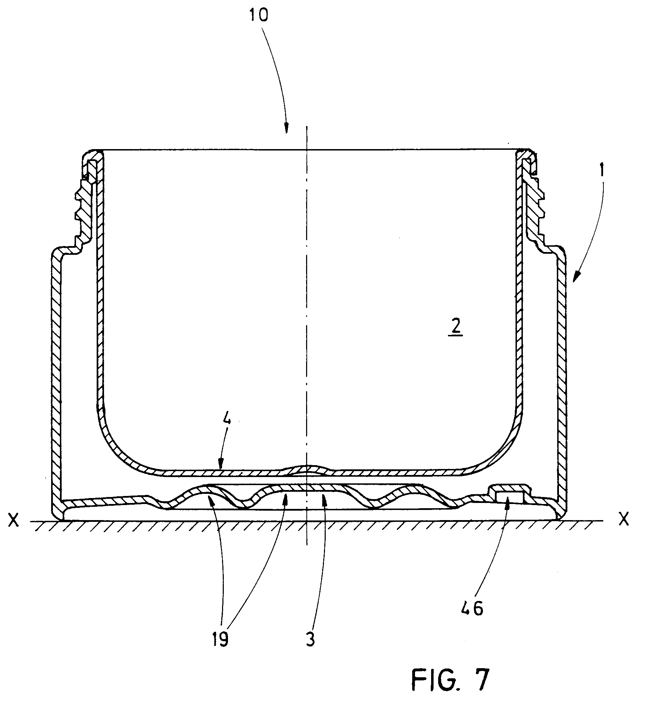

Der in Figur 1a im Schnitt sowie in Figur 1b in Draufsicht dargestellte Außenbehälter (1) weist einen Körper mit der Wandung (5) auf, die an ihrem unteren Ende (6) mit einer umlaufenden Standfläche (7) in der Standebene (x-x) ausgebildet ist. An deren Unterseite ist der Boden (3) mit Abstand von der Standebene (x-x) an der Innenseite (8) der Wandung (5) angeordnet. Erfindungswesentlich ist der Boden (3) als Membran nach Art eines federnden Elementes in besonderer Weise derart flexibel ausgebildet, daß er als Mittel zum Ausstoßen eines Innenbehälters durch Druckeinwirkung von unten her durchdrückbar bzw. hochwölbbar ist. Dabei weist der Boden (3) des Außenbehälters (1), im Querschnitt gesehen, in seiner Form zumindest stellenweise von einer über dessen Peripherie gespannten Ebene (y-y) abweichend, in rotationssymmetrischer Ausbildung nach oben oder unten in Beugungen (12, 13) verlaufende Flächenteile auf. Weiterhin besitzt der Außenbehälter (1) einen konzentrisch nach innen eingezogenen Hals (30) mit einem Außengewinde (31) zur Aufnahme eines (nicht gezeigten) Schraubdeckels. An seiner Oberseite weist der Hals (30) einen oberen Rand (32) auf, an dessen Innenseite (33) eine Halterille (34) angeordnet ist. Der Rand (32) dient mit seiner Innenseite (33) zur Führung eines einzusetzenden Innenbehälters, wie beispielsweise aus den Figuren 7 bis 12 ersichtlich ist. Der Boden (3) besitzt einen Eingriff (46), der zur Passerung des späteren Druckbildes zum Außenbehälter (1) dient. Aus der Draufsicht der Fig. 1b auf den Außenbehälter (1) ist erkennbar, daß die Wellen (12, 13) des Bodens (3) in konzentrischen Kreisen verlaufen.

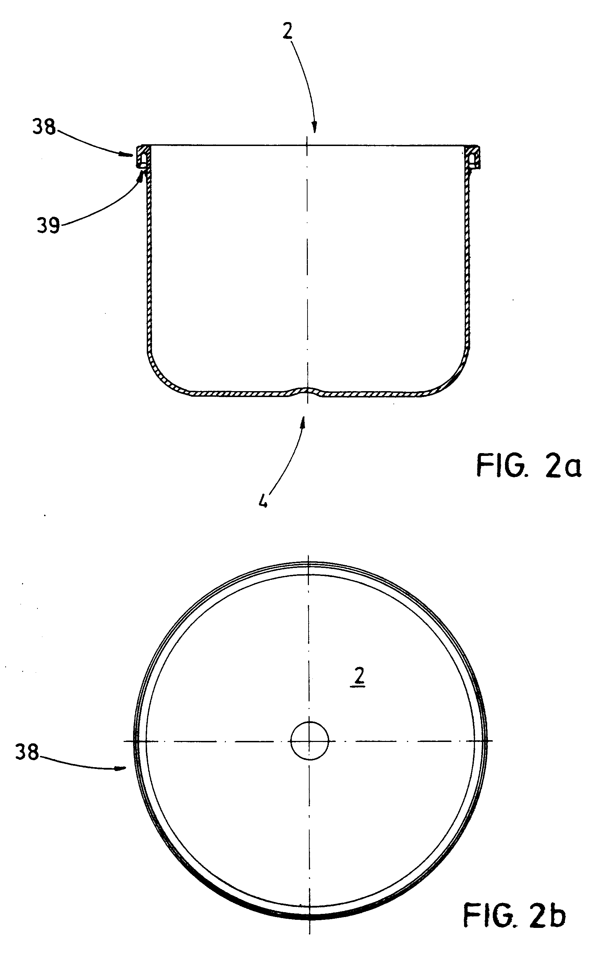

In den Figuren 2a und 2b ist ein Innenbehälter (2) im Schnitt und in Draufsicht gezeigt, wobei gleiche Elemente mit gleichen Bezugsziffern bezeichnet sind. Daraus ist erkennbar, daß der Innenbehälter (2) kompakt und unkompliziert gestaltet ist und einen für das Herausdrücken aus dem Außenbehälter geeigneten annähernd ebenflächigen stabilen Boden (4) aufweist. An seiner Oberseite hat der Innenbehälter (2) einen umlaufenden Kragen (38), der eine nach unten offene Nut (39) bildet, um damit den oberen Rand des Außenbehälters zu übergreifen, wie dies aus den Figuren 7 bis 12 ersichtlich ist.

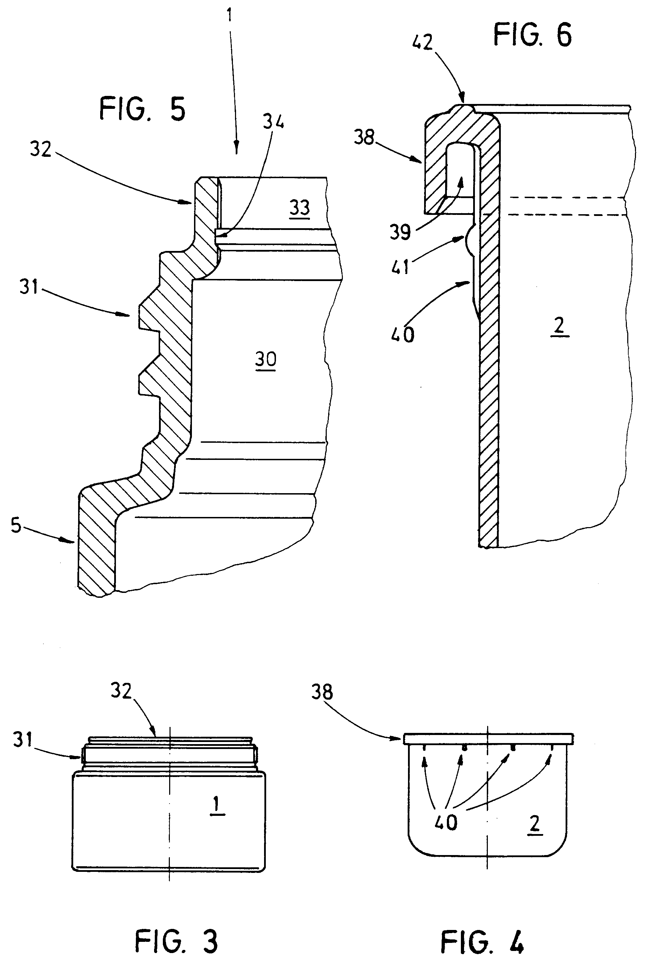

In der Figur 3 ist der äußere Behälter (1) und in der Figur 4 der Innenbehälter (2) jeweils in Ansicht gezeigt. Der Innenbehälter (2) weist in gleichmäßiger Verteilung am Umfang unterhalb des Kragens (38) Stege (40) auf, welche im Zusammenwirken mit der in Fig. 1a gezeigten Innenseite (33) des Randes (32) den Innenbehälter (2) beim Einsetzen in den Außenbehälter zentrieren und führen. Der Kragen (38) des Innenbehälters (2) umgreift nach Einsetzen in den in Fig. 3 gezeigten Außenbehälter (1) dessen oberen Rand (32) so, daß das Außengewinde (31) über den äußeren Umfang des Kragens (38) übersteht.

In der Figur 5 ist im Schnitt die Oberseite des Außenbehälters (1) in vergrößertem Maßstab gezeigt. Daraus ist der Hals (30) mit dem oberen Rand (32) und an dessen Innenseite (33) die Ausbildung der Halterille (34) erkennbar. Weiterhin zeigt Fig. 5 das Außengewinde (31) sowie den Übergang vom Hals (30) in die Wandung (5).

In Figur 6 ist im Schnitt die Oberseite des Innenbehälters (2) in vergrößertem Maßstab dargestellt. Daraus ist der umlaufende Kragen (38) und die durch diesen gebildete nach unten offene Nut (39) erkennbar, die für ein formschlüssiges Übergreifen des oberen Randes (32) am Hals des Außenbehälters (1) gemäß Fig. 5 ausgebildet ist.

Wie aus der Zusammenschau der Figuren 5 und 6 weiter zu erkennen ist, sind am Innenbehälter (2) die Stege (40) mit je einem Klemmwulst (41) ausgebildet, abgestimmt mit der Lage der Halterille (34) am Hals (30) des Außenbehälters (1). Diese bilden im Zusammenwirken miteinander ineinandergreifbare Halteelemente bzw. Rastelemente, sodaß der Innenbehälter (2) in der vorgesehenen Rastlage im Außenbehälter (1) verklipsbar verankert ist. Dadurch, daß der Innenbehälter (2) mit der nach unten offenen Nut (39) den Rand (32) des Außenbehälters (1) formschlüssig übergreift, damit ist dieser gegenüber Verschmutzung geschützt.

Figur 7 zeigt im Schnitt die Cremedose (10) mit Außenbehälter (1) und Innenbehälter (2) in verklipstem Zustand. Der Boden (3) des Außenbehälters (1) besitzt im Abstand einerseits von der Standfläche (x-x) und andererseits vom Boden (4) des Innenbehälters (2) eine Ausbildung in Form einer Membran. Dadurch wird eine solche Elastizität des Bodens (3) erreicht, daß dieser sich zum Ausstoßen des Innenbehälters (2) problemlos nach oben durchdrücken läßt.

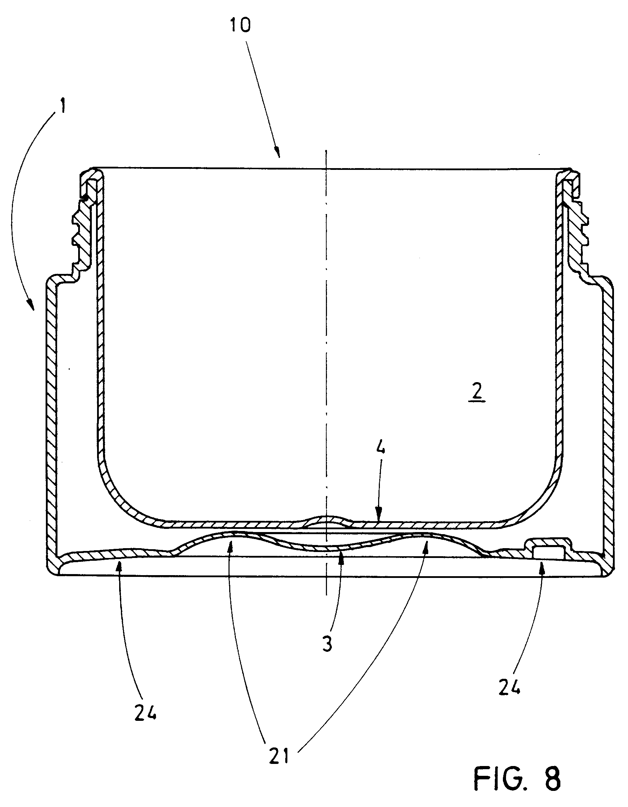

In der Figur 8 ist eine Cremedose (10) mit einem Membranboden (3) gezeigt, bei welchem ein mittlerer sinusförmig gewölbter Bodenteil (21) aus wesentlich dünnerem Material besteht, als ein peripherer Flächenteil (24). Hierdurch wird die zum Ausdrücken des Innenbehälters (2) beim Druck auf dessen Boden (4) erforderliche Beweglichkeit des Membranbodens (3) begünstigt.

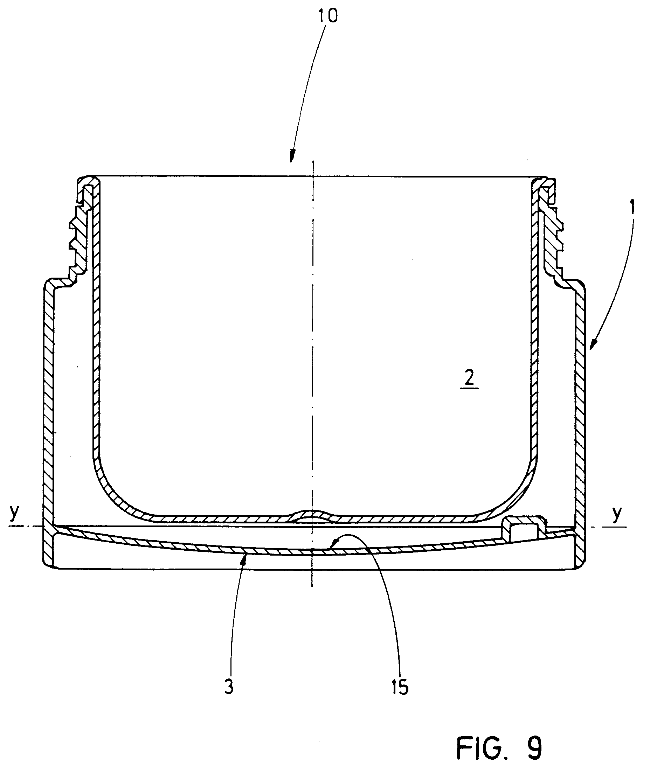

In der Figur 9 ist eine Ausführungsform der Cremedose (10) dargestellt, bei welcher der Boden (3) des Außenbehälters (1) die Form einer nach unten zu konkaven Membran (15) aufweist. Auch diese Ausgestaltung des Membranbodens (3) ist vorteilhaft, weil sie einerseits in formtechnischer Hinsicht unkompliziert ist und andererseits in funktioneller Hinsicht das Ausstoßen des Innenbehälters (2) erleichtert. Weil die Membran (15) beim Hochdrücken nach Überwinden des Totpunktes in der Ebene (y-y) sich unter Entspannung nach oben durchwölbt, leistet sie Arbeit und hilft beim Ausstoßen des Innenbehälters (2) mit.

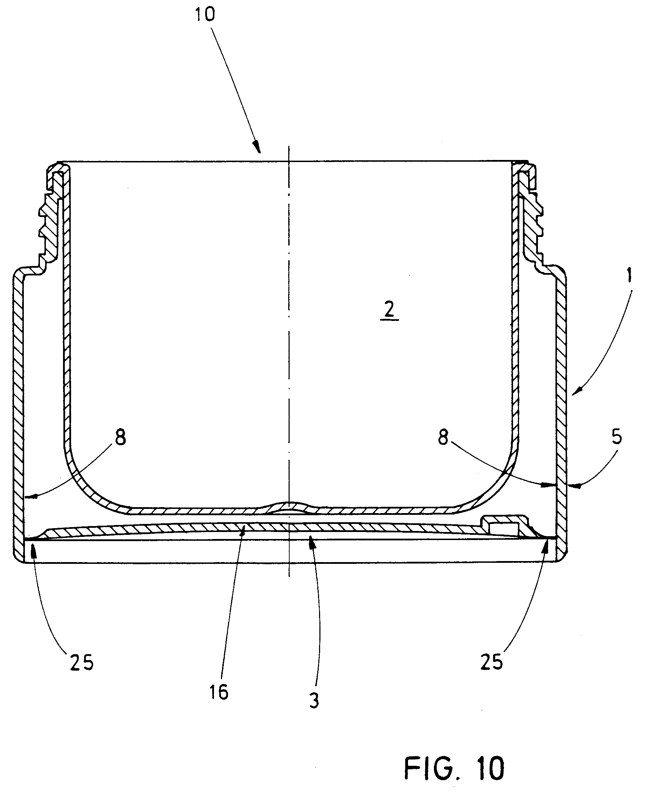

In Figur 10 ist eine andere Ausführung der Cremedose (10) gezeigt, bei welcher der Boden (3) des Außenbehälters (1) die Form einer Membran mit einer nach oben zu konvexen Wölbung (16) aufweist. Die Membran besteht aus vergleichsweise dickem Material und ist mit einem dehnbaren, peripher umlaufendem Filmscharnier (25) an der inneren Seite (8) der Wandung (5) des äußeren Behälters (1) flexibel angeordnet. Auch diese Ausgestaltung ist nun kompliziert, zweckmäßig und sehr flexibel.

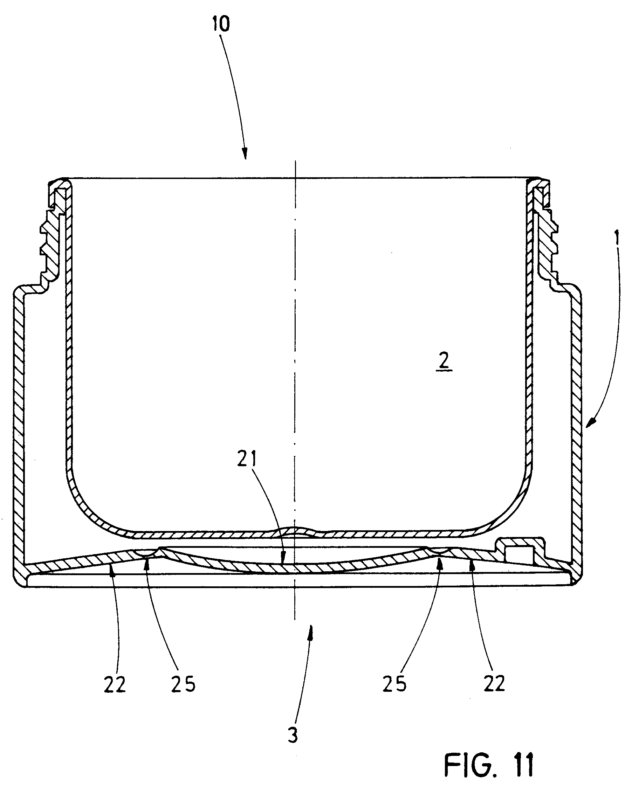

Bei der Ausführung der Cremedose (10) nach Figur 11 weist der Boden (3) des Außenbehälters (1) einen konkaven mittleren Flächenteil (21) und einen diesen konzentrisch umgebenden Flächenteil (22) auf. Der mittlere konkave Flächenteil (21) ist über ein umlaufendes Filmscharnier (25) gelenkig mit dem peripheren Flächenteil (22) verbunden. Diese Ausführung ist ebenfalls sehr flexibel und unkompliziert in der Formgebung.

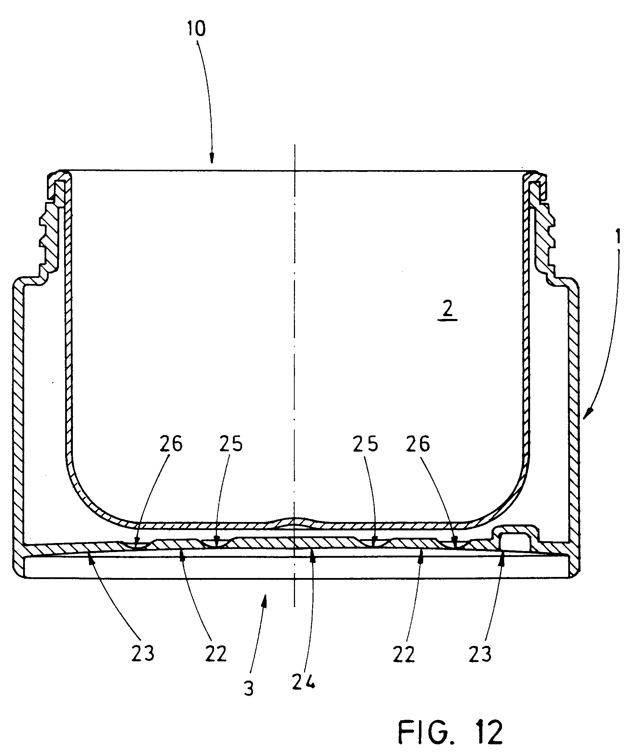

Eine Abwandlung dieser vorgenannten Ausführung zeigt Figur 12. Dabei ist der Bodenteil (3) des Außenbehälters (1) mit einem ebenen mittleren Flächenteil (24) ausgebildet, welches von zwei ebenen konzentrischen Flächenteilen (22, 23) umgeben ist. Die Flächenteile (22 - 24) sind durch zwei konzentrisch umlaufende Filmscharniere (25, 26) miteinander gelenkig verbunden. Diese Ausführung zeichnet sich wiederum durch ein hohes Maß an Flexibilität und ist in einer relativ unkomplizierten Form herstellbar.

Die Cremedose (10) erfüllt sehr vorteilhaft die eingangs gestellte Aufgabe. Dabei sind die in den Figuren 1 bis 12 gezeigten Ausführungen lediglich beispielhaft aufzufassen. Die Cremedose (10) kann im Rahmen der Erfindung hinsichtlich ihrer Formgebung sowie Ausgestaltung der Böden (3, 4) von Innen- oder Außenbehälter (2, 1) sowie hinsichtlich der Mittel zum Verklipsen im Ermessen des Fachmanns liegenden Änderungen unterworfen sein.

## Patentansprüche

1. Cremedose für kosmetische oder medizinische Präparate, umfassend einen äußeren, mit einem Deckel verschließbaren Behälter (1) und einen dem Behälter (1) angepaßten, das Präparat enthaltenden, als auswechselbarer Einsatz ausgebildeten Innenbehälter (2), **dadurch gekennzeichnet**, daß der Innenbehälter (2) und der Außenbehälter (1) durch verklipsbar ineinandergreifende Rastelemente (34, 40, 41) miteinander verbindbar sind und der Außenbehälter (1) einen in besonderer Weise als Mittel zum Ausstoßen des Innenbehälters (2) gestalteten flexiblen Boden (3) aufweist, der als Membran nach Art eines federnden Elementes durch Druckeinwirkung von unten her gegen den Boden (4) des Innenbehälters (2) durchdrückbar bzw. hochwölbbar ist.

2. Cremedose nach Anspruch 1, **dadurch gekennzeichnet**, daß die Wandung (5) des Außenbehälters (1) an ihrem unteren Ende (6) mit einer umlaufenden Standfläche (7) in der Standebene (x-x) der Cremedose (10) ausgebildet und der Boden (3) mit Abstand von dieser Standebene (x-x) an der inneren Seite (8) der Wandung (5) angeordnet ist.

3. Cremedose nach Anspruch 1 oder 2, **dadurch gekennzeichnet**, daß der Boden (3) des Außenbehälters (1) im Querschnitt gesehen, in seiner Form zumindest stellenweise von einer über dessen Peripherie gespannten Ebene (y-y) abweichend, in vorzugsweise rotationssymmetrischer Ausbildung nach oben oder unten in Beugungen (12, 13) verlaufende Flächenteile aufweist.

4. Cremedose nach einem oder mehreren der Ansprüche 1 bis 3, **dadurch gekennzeichnet**, daß der Boden (3) die Form einer nach oben konkaven Membran (15) aufweist. (Fig. 9)

5. Cremedose nach einem oder mehreren der Ansprüche 1 bis 3, **dadurch gekennzeichnet**, daß der Boden (3) die Form einer nach oben konvexen Membran (16) aufweist. (Fig. 10)

6. Cremedose nach einem oder mehreren der Ansprüche 1 bis 3, **dadurch gekennzeichnet**, daß der Boden (3) die Form einer teilweise konkaven und teilweise konvexen Membran (21) aufweist. (Fig. 8)

7. Cremedose nach einem oder mehreren der Ansprüche 1 bis 3, **dadurch gekennzeichnet**, daß der Boden (3) die Form einer mit rotationssymmetrischen Wellen (19) ausgebildeten Membran (3) aufweist. (Fig. 7)

8. Cremedose nach einem oder mehreren der Ansprüche 1 bis 3, **dadurch gekennzeichnet**, daß der Boden (3) einen mittleren Bodenteil (21) und einen diesen konzentrisch umgebenden Flächenteil (22) aufweist, wobei diese über ein umlaufendes Filmscharnier (25) gelenkig miteinander verbunden sind. (Fig. 11)

9. Cremedose nach einem oder mehreren der Ansprüche 1 bis 3, **dadurch gekennzeichnet**, daß der Boden (3) einen ebenen zentralen Bodenteil (24) und zwei ebene konzentrische Flächenteile (22, 23) aufweist, die durch zwei konzentrisch umlaufende Filmscharniere (25, 26) miteinander gelenkig verbunden sind. (Fig. 12)

10. Cremedose nach einem oder mehreren der vorhergehenden Ansprüche, **dadurch gekennzeichnet**, daß ein peripherer Flächenteil (24) aus dickerem Material besteht, als ein mittlerer Flächenteil (21) der bodenbildenden Membran (3).

11. Cremedose nach einem oder mehreren der vorhergehenden Ansprüche, **dadurch gekennzeichnet**, daß der Boden (3, 16) an seiner Peripherie über ein Filmscharnier (25) mit der Innenwand (8) des Außenbehälters (1) gelenkig verbunden ist.

12. Cremedose nach einem oder mehreren der Ansprüche 1 bis 11, **dadurch gekennzeichnet**, daß der Außenbehälter (1) einen konzentrisch nach innen eingezogenen Hals (30) mit einem Außengewinde (31) aufweist, wobei der Hals (30) einen vom Grund des Gewindes (31) nach innen abgesetzten oberen Rand (32) aufweist, und der innere Behälter (2) an seiner oberen Seite einen nach außen-unten abgewinkelten, eine umlaufende, nach unten zu offene Nut (39) ausbildenden Kragen (38) aufweist, der den Rand (32) des Außenbehälters (1) formschlüssig übergreifbar ausgebildet ist.

13. Cremedose nach einem oder mehreren der Ansprüche 1 bis 12, **dadurch gekennzeichnet**, daß beim Außenbehälter (1) an der Innenseite (33) des oberen Randes (32) eine Halterille (34) und beim Innenbehälter (2) am Umfang der Außenseite gleichmäßig verteilt angeordnete Stege (40) mit je einem Klemmwulst (41) unterhalb des Kragens (38), abgestimmt mit der Lage der Halterille (34), als ineinandergreifbare Halteelemente ausgebildet sind.

14. Cremedose nach einem oder mehreren der Ansprüche 1 bis 13, **dadurch gekennzeichnet**, daß beim Innenbehälter (2) auf der Oberseite des Kragens (38) ein umlaufender Abdichtungswulst (42) angeordnet ist.
